# EUROPEAN PATENT APPLICATION

(11) **EP 2 107 737 A1**
(43) Date of publication of application: **07.10.2009**
(21) Application number: 09004273.0
(22) Date of filing: 25.03.2009
(51) Int. Cl.: H04L 12/56, G06F 13/14

(54) **Method for controlling a buffer memory**

(30) Priority: 01.04.2008 JP 2008094937
(71) Applicant: Alps Electric Co., Ltd., Tokyo 145-8501 (JP)
(72) Inventor: Kim, Talguk, Tokyo, 145-8501 (JP)
(74) Representative: Schraud, Robert Alexander

(57) **Abstract**

A data processing method includes: sequentially receiving data transmitted by radio communication; sequentially accumulating the received data in a buffer memory (16) in which data is not yet accumulated; starting reading the data from the buffer memory (16) in an accumulating order when the amount of data accumulated in the buffer memory (16) exceeds a first critical value; adding supplementary data to the data read from the buffer memory (16) until the amount of data accumulated in the buffer memory (16) reaches a second critical value larger than the first critical value after starting reading the data from the buffer memory (16); and reading the data from the buffer memory (16) without adding the supplementary data when the amount of data accumulated in the buffer memory (16) reaches the second critical value during the reading of the data from the buffer memory (16).

## Description

### Cross Reference to Related Applications

The present application contains subject matter related to Japanese Patent Application No. 2008-094937 filed in the Japanese Patent Office on April 1, 2008, the entire contents of which being incorporated herein by reference.

### BACKGROUND

### 1. Technical Field

The present invention relates to a data processing method and a data processing device for accumulating data received by radio communication in a buffer memory and using the data.

### 2. Related Art

In the related art, there is the known technique of transmitting and receiving data using radio communication means such as wireless LAN and Bluetooth (Trade Mark), and reproducing sound and music using a device away from a player body. Japanese Patent Application Lain-Open No. 2004-221951 (Paragraphs 0023 to 0025, Fig. 2) is an example of the related art. In reproducing music, sound, movie, or the like, a real time property without discontinuance is required. Accordingly, in such a related art, received data is sequentially accumulated in a data buffer, and a state where the amount of accumulated data exceeds a predetermined critical value is kept, thereby preventing jitter from occurring between a transmitter and a receiver.

At the time point of starting radio communication for the first time, a buffer memory is empty (no data is accumulated), and thus a reproducing operation cannot be started at the same time of starting communication. Considering such a problem, there is the known technique in which data is sequentially accumulated in a buffer memory until predetermined time elapses after receiving data, and then a reproducing operation is started after the amount of accumulated data reaches a predetermined critical value. Japanese Patent Application Lain-Open No. 2007 - 266875 (Paragraphs 0019 to 0023, Fig. 4) is an example of the related art. In such a related art, even when data communication condition deteriorates after starting the reproducing operation, it is possible to continue the reproducing operation without interruption using the data accumulated until that time.

To prevent sound of a receiver from being interrupted or video from being delayed, it is preferable to start a reproducing operation after a critical value of a buffer memory is set high to a predetermined degree and data is accumulated as much as possible. However, when the critical value of the buffer memory is set too high, delay time (latency) from the time of starting radio communication to the time of really starting a reproducing operation is extended. On the other hand, when the critical value is set too low, resistance to sound discontinuance deteriorates when a communication condition deteriorates during reproducing.

As described above, in the real time transmission and reception of data using radio communication, shortening of delay time and stability of reproduction are in a tradeoff relationship with each other. Accordingly, a technique for their coexistence is demanded.

### SUMMARY

An advantage of some aspects of the invention is to provide a technique capable of effectively suppress jitter during communication without careless deterioration of latency at the time of starting communication.

A second critical value larger than a first critical value is newly set separately from the first critical value for starting using received data, and the amount of data accumulated in a buffer memory is managed by the second critical value as reference after starting using the data.

According to an aspect of the invention, a data processing method includes: sequentially receiving data transmitted by radio communication; sequentially accumulating the received data in a buffer memory in which data is not yet accumulated; starting reading the data from the buffer memory in an accumulating order when the amount of data accumulated in the buffer memory exceeds a first critical value; adding supplementary data to the data read from the buffer memory until the amount of data accumulated in the buffer memory reaches a second critical value larger than the first critical value after starting reading the data from the buffer memory; and reading the data from the buffer memory without adding the supplementary data when the amount of data accumulated in the buffer memory reaches the second critical value during the reading of the data from the buffer memory.

According to another aspect of the invention, a data processing device includes: a data receiving unit for sequentially receiving data transmitted by radio communication; a buffer memory capable of temporarily accumulating data; a data accumulating unit for sequentially accumulating the data received by the data receiving unit in the buffer memory in which data is not yet accumulated; a data acquiring unit for starting reading the data from the buffer memory in an accumulating order when the amount of data accumulated in the buffer memory exceeds a first critical value; and a data processing unit for adding supplementary data to the data read from the buffer memory until the amount of data accumulated in the buffer memory reaches a second critical value larger than the first critical value after the data acquiring unit starts reading the data, and discontinuing adding the supplementary data when the amount of data accumulated in the buffer memory reaches the second critical value during the reading of the data performed by the data acquiring unit.

According to the aspects of the invention, data is not read from the buffer memory and the received data is sequentially accumulated in the buffer memory, until the amount of data accumulated in the buffer memory reaches the first critical value after radio communication is started in a state where the buffer memory is empty (no data is accumulated).

When the amount of data accumulated in the buffer memory exceeds the first critical value, reading of the accumulated data is started. The read data is used for, for example, reproducing music, sound, or movie. In the invention, the data read from the buffer memory is not used as it is, but is used by adding the supplementary data to the read data.

In this case, even when the data is used at a regular rate during reproduction of music or movie, it is possible to reduce the amount of data read from the buffer memory as compared with the amount of data newly accumulated in the buffer memory in a unit of time. For this reason, unless communication condition extremely deteriorates, the amount of accumulated data is getting smoothly increased even after the reading of data from the buffer memory is started.

Thereafter, when the amount of data accumulated in the buffer memory exceeds the second critical value, the data is read from the buffer memory without adding the supplementary data. Accordingly, the increase of the data in the buffer memory is suppressed, and thus the amount of accumulated data is stabilized in the vicinity of the second critical value. For example, when the communication condition deteriorates and the amount of accumulated data is decreased, the supplementary data is added to the data read from the buffer memory as described above. Accordingly, even when the amount of accumulated data is temporarily less than the second critical value, the amount of accumulated data is getting increased toward the second critical value.

For this reason, in the invention, the first critical value is set appropriately low and the second critical value is set appropriately high. With such a configuration, it is possible to suppress latency low until the reading of data is started for the first time, and further the amount of data accumulated in the buffer memory is pulled up in some extent during the data reading. Therefore, it is possible to effectively suppress occurrence of jitter.

In the invention, the received data may be sequentially accumulated with the supplementary data added to the received data until the amount of data accumulated in the buffer memory reaches the first critical value after the radio communication is started in a stat where the buffer memory is empty.

In this case, data more than the data really received in a unit of time by the supplementary data is getting accumulated in the buffer memory, and thus the time until the amount of accumulated data reaches the first critical value is shortened. Accordingly, it is possible to suppress latency.

The received data may be accumulated in the buffer memory by a predetermined number of continuous samples. In this case, the supplementary data is created by a nearest neighbor method using sample data of the end of the predetermined number of continuous samples.

In this case, it is possible to add the supplementary data with a relatively simple method. Therefore, it is possible to reduce load of a data process and to shorten process time.

More practically, the data is transmitted and received in audio data format, and a reproducing operation is performed using the audio data read from the buffer memory. In this case, it is possible to improve resistance to sound discontinuance while suppressing latency low until starting reproduction of audio data.

As described above, according to the aspects of the invention, it is possible to reliably suppress jitter from occurring between communication devices when data is transmitted and received by radio communication without deterioration of latency, and both of shortening of delay time and stability of reproduction can coexist without sacrifice of any one.

### BRIEF DESCRIPTION OF THE DRAWINGS

Fig. 1 is a schematic diagram illustrating a configuration of a data processing device according to an embodiment of the invention.
Fig. 2 is a flowchart illustrating an example of an audio packet receiving process.
Fig. 3 is a concept diagram illustrating sequence of accumulating data in a jitter buffer and reading data from the jitter buffer in the audio packet receiving process.

### DESCRIPTION OF EXEMPLARY EMBODIMENTS

The invention will be described hereinafter with reference to the accompanying drawings.

### Configuration of Data Processing Device

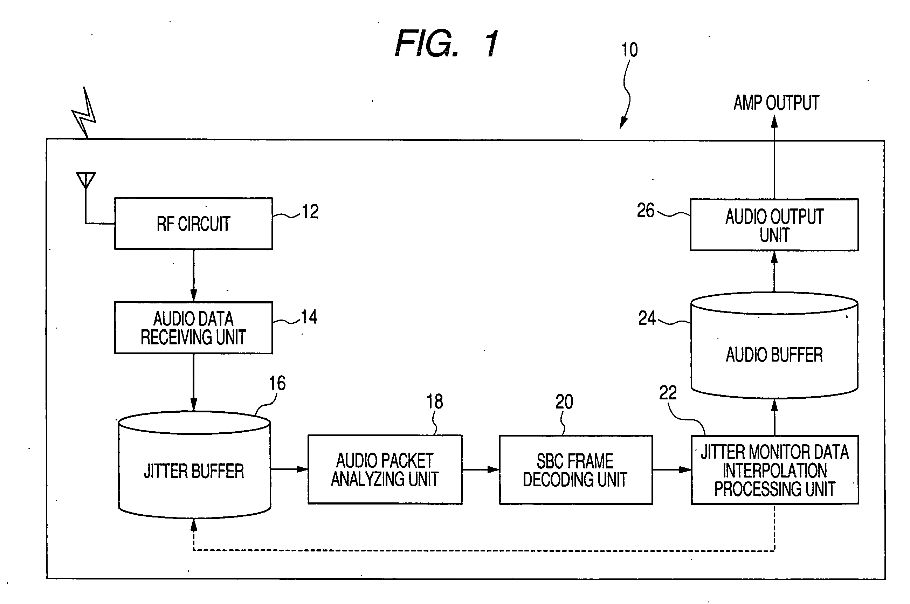

Fig. 1 is a schematic diagram illustrating a configuration of a data processing device 10 according to an embodiment of the invention. The data processing device 10 is configured as a radio communication module based on, for example, Bluetooth (Trade Mark) standard. The data processing device 10 can be used as a radio communication module built in, for example, audio apparatuses such as wireless speakers and wireless headphones.

The data processing device 10 includes, for example, an RF circuit 12, and performs radio communication with the other device by the RF circuit 12. As described above, when the data processing device 10 is used as the radio communication module for the wireless speaker or the wireless headphone, the data processing device 10 performs radio communication with, for example, a potable music player, a mobile phone, a personal computer, a video game, and the like, which have a music playing function.

The data processing device 10 includes an audio data receiving unit 14 and a jitter buffer 16. The audio data receiving unit 14 demodulates a signal received in the RF circuit 12, and creates audio data (audio packet). The jitter buffer 16 is a buffer memory having a storage capacity to some extent, and the audio data created in the audio data receiving unit 14 is sequentially accumulated in the jitter buffer 16. The jitter buffer 16 is of an FIFO type.

The data processing device 10 includes an audio packet analyzing unit 18, an SBC frame decoding unit 20, and a jitter monitor/data interpolation processing unit 22. Each of the audio packet analyzing unit 18, the SBC frame decoding unit 20, and the jitter monitor/data interpolation processing unit 22 has a function as an arithmetic processing circuit.

The audio packet analyzing unit 18 sequentially reads audio data from the jitter buffer 16, and analyzes the audio packet. The SBC frame decoding unit 20 decodes the analyzed audio packet into SBC frames. In the embodiment, for example, one audio packet includes a plurality of SBC (Subband Codec) frames. The SBC frame is a kind of compression (codec) format of audio data. In the compression format, a frame is a minimum unit. A predetermined number M (e.g., 128 or less) of audio samples (PCM format) are output from one SBC frame. One sample includes, for example, 16-bit audio data on the left and 16-bit audio data on the right. The number of samples and the number of bits are not limited thereto.

The jitter monitor/data interpolation processing unit 22 monitors the amount of data accumulated in the jitter buffer 16, and performs an interpolation process on the audio sample according to condition. The interpolation process may be performed by, for example, a nearest-neighbor method. That is, in the embodiment, a sample obtained by copying one sample at the end of the predetermined number M of audio samples is supplemented to perform the interpolation process. In this case, the copied one sample at the end is supplementary data.

The data processing device 10 includes an audio buffer 24 and an audio output unit, as a configuration for reproducing audio. The audio buffer 24 is a buffer memory in which the audio samples output from the SBC frame decoding unit 20 are sequentially accumulated. The audio buffer 24 is also of the FIFO type.

The audio output unit 26 reads the audio samples from the audio buffer 24 at a regular sampling rate, and outputs the audio samples to an amplifier (not shown). The output audio samples are converted into analog signals by the amplifier (D/A converter), and the converted analog signals are amplified and used as driving signals for a speaker.

### Audio Packet Receiving Process

An audio packet receiving process performed in the data processing device 10 will be described hereinafter in detail.

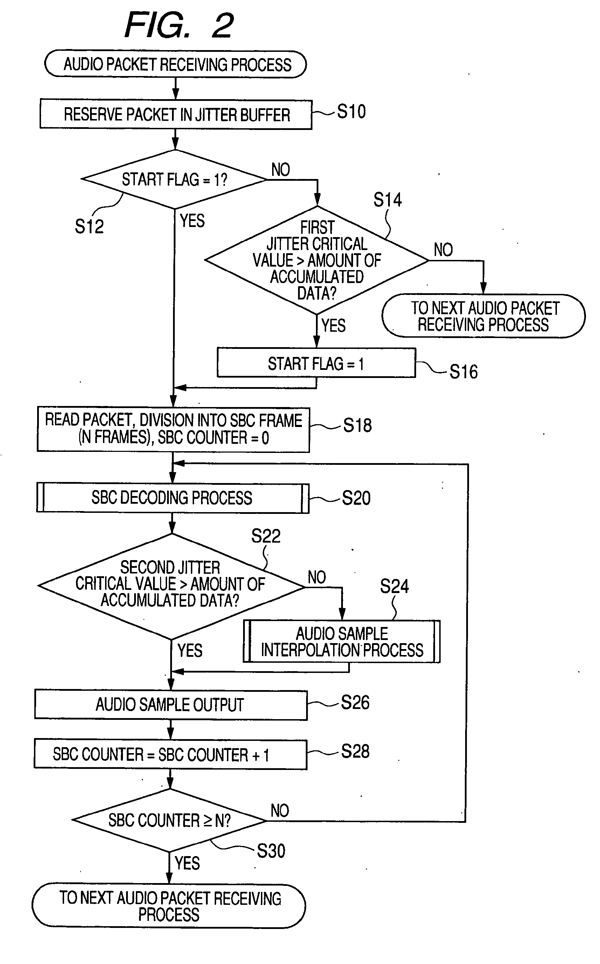

Fig. 2 is a flowchart illustrating an example of sequence of an audio packet receiving process. The audio packet receiving process will be described in order. It is assumed that the audio packet receiving process is started, for example, in a state where the jitter buffer 16 is empty (no data is accumulated).

Step S10: The data processing device 10 stores audio packets created by the audio data receiving unit 14 in the jitter buffer 16 by performing the audio packet receiving process.

Step S12: After the packets are stored, it is confirmed whether or not a value (=01h) is set in a start flag. The start flag is, for example, a control flag used as a reproduction output starting flag of audio samples. The initial value of the start flag is 00h. When the initial value is replaced by 01h, a reproducing operation is started.

At the time of starting a real audio packet receiving process, the start flag is not set (initial value=00h). Accordingly, the data processing device 10 performs an operation of Step S14 at the next time. The value of the flag is stored in a storage region such as a register and a RAM (not shown).

Step S14: It is confirmed whether or not the amount of data accumulated in the jitter buffer 16 exceeds a first jitter critical value (TH_jitter1). The first jitter critical value is a value for setting a condition for starting reading of data from the jitter buffer 16. That is, when the amount of data accumulated in the jitter buffer 16 does not reach the first jitter critical value (Step S14: No), the accumulating operation is continuously performed without the reading of data. In this case, the data processing device 10 proceeds to a next audio packet receiving process (Return).

Also in the next audio packet receiving process, the operations of Step S10 to Step S14 are repeatedly performed. As a result, the received audio packets are sequentially accumulated in the jitter buffer 16.

When the amount of data accumulated in the jitter buffer 16 exceeds the first jitter critical value (Step S14: Yes), the data processing device 10 performs an operation of Step S16 at the next time.

Step S16: The data processing device 10 sets a value (=1) in the start flag. When the value is set in the start flag, an operation of Step S18 is performed through the confirmation (Yes) of Step S12.

Step S18: The audio packets are read from the jitter buffer 16 by the audio packet analyzing unit 18. Accordingly, data is getting read sequentially from the first accumulated audio packet. The read audio packet is divided into SBC frame (N frames). A value of an SBC counter is reset (=0). The value of the SBC counter is stored also in the storage region such as a register and a RAM.

Step S20: The divided SBC frames are decoded by the SBC frame decoding unit 20. Accordingly, a predetermined number of audio samples are output as described above.

### Case: the amount of accumulated data does not reach the second jitter critical value

Step S22: In the jitter monitor/data interpolation unit 22, the amount of data accumulated in the jitter buffer 16 is monitored, and it is confirmed whether or not the present amount of accumulated data exceeds a second jitter critical value (TH_jitter2). As a result, when the amount of accumulated data does not yet reach the second jitter critical value (Step S22: No), an operation of Step S24 is performed at the next time.

Step S24: An audio sample interpolation process is performed by the jitter monitor/data interpolation processing unit 22. The interpolation process is performed by the nearest-neighbor method as described above.

Step S26: Audio samples on which the interpolation process is performed by the jitter monitor/data interpolation process unit 22 are output. The output audio samples are sequentially accumulated in the audio buffer 24.

### Case: the amount of accumulated data exceeds the second jitter critical value

The above-described processes are performed when the amount of accumulated data does not reach the second jitter critical value. When the amount of accumulated data exceeds the second jitter critical value, the following operations are performed.

Step S22: When the present amount of accumulated data exceeds the second jitter critical value (Step S22: Yes), the operation of Step S26 is performed without performing the operation of Step S24. Accordingly, the interpolation process of the audio samples is interrupted.

Step S26: Audio samples on which the interpolation process is not performed are output. The output audio samples are sequentially accumulated in the audio buffer 24.

Step S28: The value of the SBC counter is increased (+1). At this time, the value after the increment is overwritten and reserved in the SBC counter.

Step S30: It is confirmed whether or not the value of the SBC counter is equal to or more than a predetermined value N. The predetermined value N corresponds to the number of SBC frames included in the audio packet. Accordingly, when the value of the SBC counter is less than the predetermined value N (Step S30: No), the process is returned to Step S20 and the next SBC decoding process is performed. Then, the operations of Step S22 to Step S28 are repeated.

When the operations of Step S20 to Step S28 are repeated N times, the value of the SBC counter reaches to the predetermined value N (Step S30: Yes). In this case, the data processing device 10 proceeds to the next audio packet receiving process (Return).

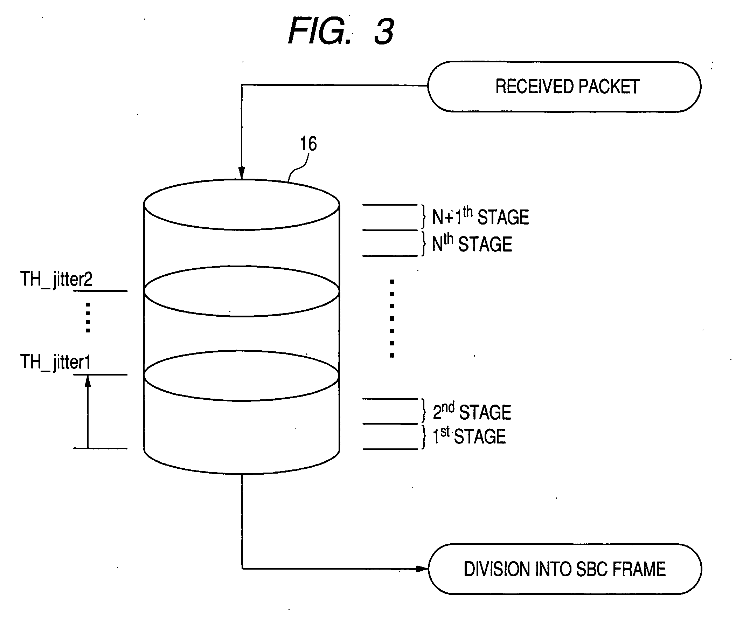

Fig. 3 is a concept diagram illustrating sequence of accumulating data in the jitter buffer 16 and reading data from the jitter buffer 16 in the audio packet receiving process. As described above, the jitter buffer 16 is of the FIFO type. When the packet is reserved in Step S10, the data is getting accumulated in an order of a first stage, a second stage, a third stage, and so on.

### Case: the amount of accumulated data is less than the first jitter critical value

Only the accumulating of the data is performed without the reading of data until the amount of accumulated data reaches the first jitter critical value (TH_jitter1) (Step S14: NO). Accordingly, the reproducing of the audio samples is not started during this time, latency of radio communication is kept.

### Case: the amount of accumulated data exceeds the first jitter critical value

When the amount of accumulated data exceeds the first jitter critical value, the reading of data from the jitter buffer 16 is started (Step S14: Yes). In this case, the value (=01h) is set in the start flag, and then the reserving of the packet and the reading (division into SBC frames) of the data are performed together (Step S10 → Step S12 Step S18). The reading of data is performed in an order of accumulation according to the FIFO type. Accordingly, the output of the audio samples from the data processing device 10 is really started. As a result, audio reproduction is started by audio apparatus (not shown).

### Case: the amount of accumulated data after starting the reproduction is less than the second jitter critical value

When the amount of accumulated data is less than the second jitter critical value (TH_jitter2) even after starting the output of the audio samples (Step S22: No) as described above, the interpolation-processed audio samples are output. Accordingly, the amount of read data is increased as compared with the amount of accumulated data per a unit of time. Therefore, the amount of accumulated data is getting smoothly increased toward the second jitter critical value during the audio sample reproduction.

### Case: the amount of accumulated data exceeds the second jitter critical value

Thereafter, when the amount of accumulated data exceeds the second jitter critical value, the interpolation process is interrupted as described above (Step S22 **→** Step S26). Accordingly, the amount of accumulated data is stabilized in the vicinity of the second jitter critical value. When the amount of accumulated data is temporarily less than the second jitter critical value due to deterioration of the communication condition, the interpolation process is restarted and the amount of accumulated data is increased until the amount of accumulated data reaches the second jitter critical value.

As described above, as for the critical value of the jitter buffer 16 in the embodiment, the first jitter critical value and the second jitter critical value are set independently from each other. Accordingly, the first reproduction starting condition is set to be the first jitter critical value, and the level of the amount of the accumulated data thereafter can be managed to be the second jitter critical value. For this reason, it is possible to raise the resistance to sound discontinuance to high level without particular deterioration of latency.

### Other Embodiments

In the above-described audio packet receiving process, the data interpolation process may be performed until the amount of data accumulated in the jitter buffer 16 reaches the first jitter critical value. For example, the same operation as Step S14 is inserted before Step S10 in Fig. 2, and a step of performing the interpolation process when the amount of accumulated data is less than the first jitter critical value (No) is added. In this case, it is possible to shorten the time when the amount of accumulated data reaches the first jitter critical value, and thus it is possible to reduce the latency.

The invention is not limited to the above-described embodiments, and may be variously modified. In the embodiment, the data processing device 10 is provided with the audio packet analyzing unit 18, the SBC frame decoding unit 20, the jitter monitor/data interpolation processing unit 22, and the like. However, these functions may be supplied from resources of a micro computer (CPU), and each of the functions may be realized by applications.

In the embodiment, the audio data is described by way of example, but the invention may be applied to video data processes.

## Claims

1. A data processing method comprising:
sequentially receiving data transmitted by radio communication;
sequentially accumulating the received data in a buffer memory in which data is not yet accumulated;
starting reading the data from the buffer memory in an accumulating order when the amount of data accumulated in the buffer memory exceeds a first critical value;
adding supplementary data to the data read from the buffer memory until the amount of data accumulated in the buffer memory reaches a second critical value larger than the first critical value after starting reading the data from the buffer memory; and
reading the data from the buffer memory without adding the supplementary data when the amount of data accumulated in the buffer memory reaches the second critical value during the reading the data from the buffer memory.

2. The data processing method according to Claim 1, wherein the received data is sequentially accumulated with the supplementary data added to the received data until the amount of data accumulated in the buffer memory reaches the first critical value.

3. The data processing method according to Claim 1 or 2, wherein the received data is accumulated in the buffer memory by a predetermined number of continuous samples, and
wherein the supplementary data is created by a nearest-neighbor method of using sample data at the end of the predetermined number of continuous samples.

4. The data processing method according to Claim 1, 2 or 3, wherein the data is transmitted and received in audio data format, and
wherein a reproducing operation is performed using the audio data read from the buffer memory.

5. A data processing device comprising:
a data receiving unit for sequentially receiving data transmitted by radio communication;
a buffer memory capable of temporarily accumulating data;
a data accumulating unit for sequentially accumulating the data received by the data receiving unit in the buffer memory in which data is not yet accumulated;
a data acquiring unit for starting reading the data from the buffer memory in an accumulating order when the amount of data accumulated in the buffer memory exceeds a first critical value; and
a data processing unit for adding supplementary data to the data read from the buffer memory until the amount of data accumulated in the buffer memory reaches a second critical value larger than the first critical value after the data acquiring unit starts reading the data, and discontinuing adding the supplementary data when the amount of data accumulated in the buffer memory reaches the second critical value during the reading of the data performed by the data acquiring unit.
